# EUROPÄISCHE PATENTSCHRIFT

(11) **EP 1 877 679 B1**
(45) Veröffentlichungstag und Bekanntmachung des Hinweises auf die Patenterteilung: **07.07.2010**
(21) Anmeldenummer: 06707438.5
(22) Anmeldetag: 06.03.2006
(51) Int. Cl.: F16D 65/56

(54) **NACHSTELLVORRICHTUNG FÜR EINE PNEUMATISCH BETÄTIGTE SCHEIBENBREMSE**
ADJUSTING APPARATUS FOR A PNEUMATICALLY ACTUATED DISC BRAKE
DISPOSITIF DE RATTRAPAGE DE JEU POUR UN FREIN A DISQUE A COMMANDE PNEUMATIQUE

(30) Priorität: 24.03.2005 DE 102005014428; 31.08.2005 DE 102005041344
(43) Veröffentlichungstag der Anmeldung: 16.01.2008
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(86) Internationale Anmeldenummer: PCT/EP2006/002024
(87) Internationale Veröffentlichungsnummer: WO 2006/099938

(56) Entgegenhaltungen:
- EP-A- 0 225 791
- WO-A-91/19115
- US-A- 4 350 228
- US-B1- 6 213 255

## Beschreibung

Die Erfindung betrifft eine Nachstellvorrichtung für eine pneumatisch betätigte Scheibenbremse nach dem Oberbegriff des Anspruchs 1.

Pneumatisch betätigte Scheibenbremsen gehören mittlerweile zum Standard bei schweren Nutzfahrzeugen.

Der Scheibenbremse ist in der Regel ein pneumatisch betätigter Bremszylinder zugeordnet, der eine Kolbenstange aufweist, die auf eine Zuspannvorrichtung der Scheibenbremse einwirkt, um die Bremse zuzuspannen. Bekannte Bauarten sind die Schiebesattelscheibenbremse, die Schwenksattelscheibenbremse und die Festsattelscheibenbremse.

Derartige Scheibenbremsen benötigen zur Erzeugung der erforderlichen Zuspannkraft eine mechanische Übersetzung, da die Kraft der pneumatisch beaufschlagten Bremszylinder wegen des Druckniveau (derzeit ca. 10 bar) und der limitierten Baugröße der Bremszylinder beschränkt ist.

Bei den derzeit bekannten pneumatisch betätigten Scheibenbremsen finden sich Übersetzungsverhältnisse zwischen 10 : 1 und 20 : 1. Die Kolbenhübe der Bremszylinder bewegen sich zwischen 50 und 70 mm, woraus sich Zuspannwege zum Andrücken der Bremsbeläge an die Bremsscheibe von etwa 4 mm ergeben.

Die Reibmaterialdicke der Bremsbeläge liegt üblicherweise im Bereich von 20 mm. Da zwei Beläge eingebaut werden, ergibt sich somit ohne Berücksichtigung des Scheibenverschleißes ein Verschleißweg von etwa 40 mm. Dieser Weg ist um ein Vielfaches größer als der eigentliche Zuspannweg zum Zuspannen der Bremse. Es besteht daher die Notwendigkeit dazu, die Bremse mittels einer Nachstellvorrichtung dem Belagverschleiß entsprechend nachzustellen.

Stand der Technik ist eine automatisch arbeitende Verschleißnachstellung mit der erreicht wird, daß das sog. Lüftspiel, d.h. der Spalt zwischen den Bremsbelägen und der Bremsscheibe in unbetätigten Zustand unabhängig vom Verschleißzustand und Verschleißverhalten der Bremsbeläge konstant gehalten wird.

Bei einer Bauart bekannter Scheibenbremsen werden konzentrisch im Hohlraum eines Gewindestempels Nachstellvorrichtungen untergebracht und exzentrisch über ein Antriebselement (Schaltfinger) vom Bremshebel angetrieben (siehe z.B. die DE 197 29 024 C1 oder die EP 0 566 008 A1 oder die WO 91/19115).

Bei Bremsungen führt der mit der Kolbenstange des Bremszylinders gekoppelte Bremshebel eine Drehbewegung aus. Bevor über den Koppelmechanismus der Nachstellung (Schaltgabel und Schaltfinger) die Drehbewegung des Hebels in den Nachsteller eingeleitet wird, muß ein sog. Leerweg überwunden werden. Dieser Weg ist für die Größe des Lüftspiels ausschlaggebend, da während dieser Bewegung die Nachstellung nicht aktiviert wird und der Zuspannweg dann das Lüftspiel darstellt.

Nach Überwinden des Leerweges wird der Nachsteller in eine Drehbewegung versetzt, wobei durch die Kopplung mit dem Gewinderohr ein Nachstellvorgang eingeleitet wird.

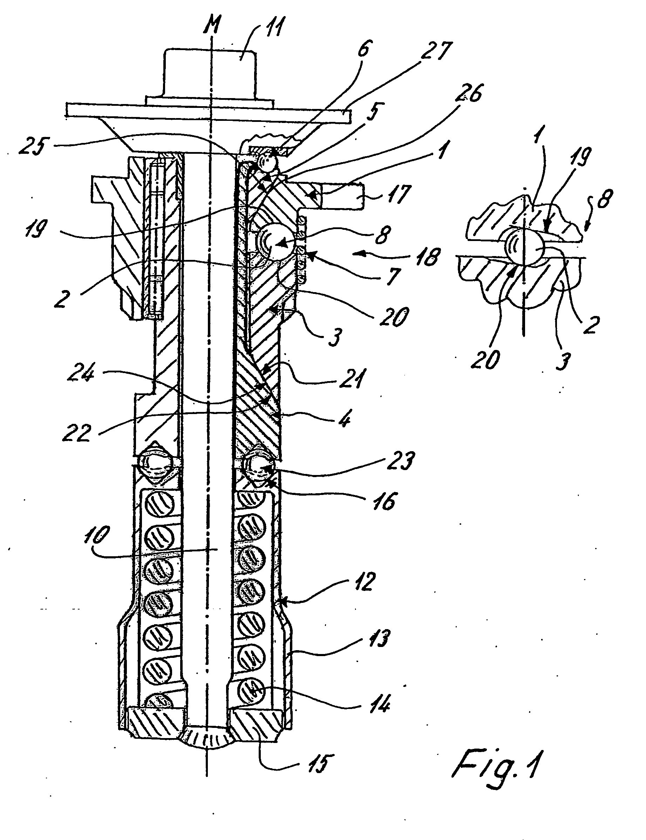

Ein grundlegendes Bauteil des Verschleißnachstellers ist die Einweg-Drehrichtungskupplung, die beispielsweise als Klemmrollenfreilauf ausgebildet sein kann. Durch diesen Freilauf- gelegentlich auch als Einwegdrehrichtungskupplung bezeichnet - wird erreicht, daß der Nachsteller nur in Zustellrichtung vom Bremshebel verdreht werden kann und nicht zurückgestellt wird (linke Seite in Fig. 1).

Bei einem Klemmrollenfreilauf handelt es sich um ein Präzisionsbauteil, das zur einwandfreien Funktion eine große Genauigkeit der korrespondierenden Bauteile erfordert. Aufgrund der hohen Genauigkeit der Funktionselemente ergibt sich ein relativ hoher Kostenaufwand zur Herstellung der Bauteile.

Daher ist es die Aufgabe der Erfindung, die gattungsgemäße Nachstellvorrichtung derart weiterzuentwickeln, daß die Herstellkosten bei weiter guter Funktionssicherheit verringert werden.

Die Erfindung löst diese Aufgabe durch den Gegenstand des Anspruches 1.

Vorteilhafte Ausgestaltungen sind den Unteransprüchen zu entnehmen.

Erfindungsgemäß wird die Einweg-Drehrichtungskupplung realisiert, die nur einen geringen Herstellungsaufwand erfordern, ohne daß damit eine Einschränkung der Funktion und eine Bauraumvergrößerung einhergeht.

Eine Wälzkörperkupplung in der Einwegdrehrichtungskupplung ist aus der gattungsbildenden WO 91/19115 (Fig. 3) bekannt. Diese Anordnung ist aber immer noch relativ teuer und hinsichtlich ihrer Funktionssicherheit weiter zu verbessern.

Die Erfindung schafft auch eine Scheibenbremse mit einer erfindungsgemäßen Nachstellvorrichtung.

Zusammengefaßt ergeben sich folgende Vorteile:
- Einfacher Aufbau;
- Geringere Genauigkeitsanforderungen an die Einzelteile;
- Geringe Toleranzempfmdlichkeit;
- Herstellung der Bauteile durch spanloses Formen;
- Hohe Anpassungsfähigkeit durch vielfältige Parametereinstellmöglichkeiten;
- Einstellbares Reibmoment in "Überholrichtung" mittels Drehfeder; und
- Geringe Funktionshysterese, da alle bewegten Teile kugelgelagert sind.

Nachfolgend wird die Erfindung unter Bezug auf die Zeichnung näher beschrieben. Es zeigt:
- Fig. 1: einen Schnitt durch eine bekannte Nachstellvorrichtung (linke Seite der Mittellinie M) und eine erfindungsgemäße Nachstellvorrichtung (rechte Seite der Mittellinie M) und einen Schnitt durch den Bereich eines Wälzkörpers an der Antriebs- und der Abtriebsbuchse der Erfin- dung; und
- Fig. 2,3: eine schematische Darstellung einer bekannten Scheibenbremse, die sich prinzipiell zur Aufnahme der Nachstellvorrichtung nach Art der Fig. 1 eignet.

Zunächst seien kurz Aufbau und Funktion der pneumatischen Scheibenbremse nach Figur 1 bis 3 skizziert.

Die Scheibenbremse 101 weist einen Bremssattel 102 auf, der eine innen belüftete Bremsscheibe 103 umgreift. Auf der einen Seite der Bremsscheibe 103 ist eine Zuspannvorrichtung 104 vorgesehen, welche einen gleitgelagerten Betätigungs-Drehhebel 105 aufweist, der von einer Kolbenstange eines Druckluftzylinders D bewegt wird und (siehe hierzu die gestrichelte Position des Hebels 105) seinerseits einen Exzenter 106 betätigt bzw. dreht, der wiederum hier über eine Traverse 107 mit zwei Stellspindeln 108, 109 zusammenwirkt, gegen welche sich einer der Bremsbeläge 110 abstützt. Die beiden Stellspindeln 108, 109 sind vermittels einer Synchronisationseinrichtung, hier eine Kette, 111 gekoppelt. Eine Feder 112 zwischen die Traverse 107 und den Bremssattel 102 sorgt für eine Vorspannung der Traverse 107 in Richtung des Drehhebels 105.

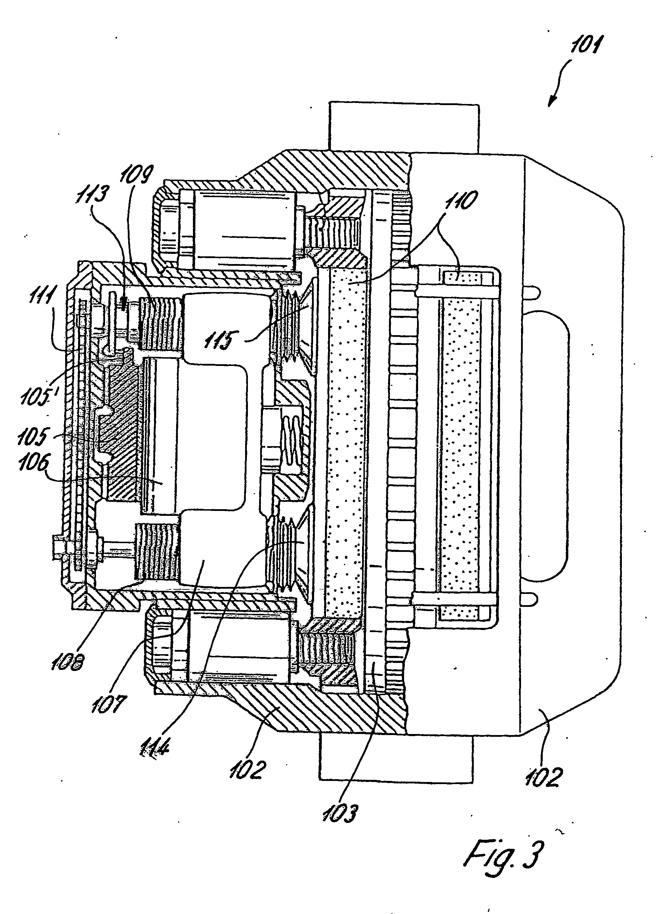

Die Traverse 107 weist an beiden Außenseiten jeweils eine mit Innengewinde versehene Bohrung auf, in welche die mit Außengewinden versehenen Stellspindeln 108 und 109 eingeschraubt sind. In die Ausnehmung der in Figur 3 oberen Stellspindel 109 ragt ein Drehantrieb 113 (der hier nach dem Stand der Technik ausgebildet ist, was aber bzgl. des Grundprinzips der Betätigung des Drehantriebs keinen Unterschiede mit sich bringt), der vom Drehhebel 105 bzw. einem an diesem angeformten Stift 105' betätigt wird und während des Anlegehubes ein Verschrauben der Stellspindel 109 - und damit über die Kette 111 auch der anderen Stellspindel 108 - in Annäherungsrichtung an die Bremsscheibe 103 bewirkt.

Bei einer Beaufschlagung des Zylinders D mit Druckluft wird der Drehhebel 5 verschwenkt, was den Exzenter 106 dreht und die Traverse 107 zur Bremsscheibe 103 hin verschiebt, so daß sich die Spindeln 108, 109 in Richtung des einen Belages 110 bewegen. Die Druckstücke 114, 115 an den Enden der Stellspindeln 108, 109 schieben, damit einen der Bremsbeläge 110 zur Bremsscheibe 103. Dabei verschiebt sich auch der an einem Bremsträger (nicht dargestellt) axial verschieblich gelagerte Bremssattel 102, welcher den anderen Bremsbelag 110 mitnimmt, so daß die Bremse zuspannt.

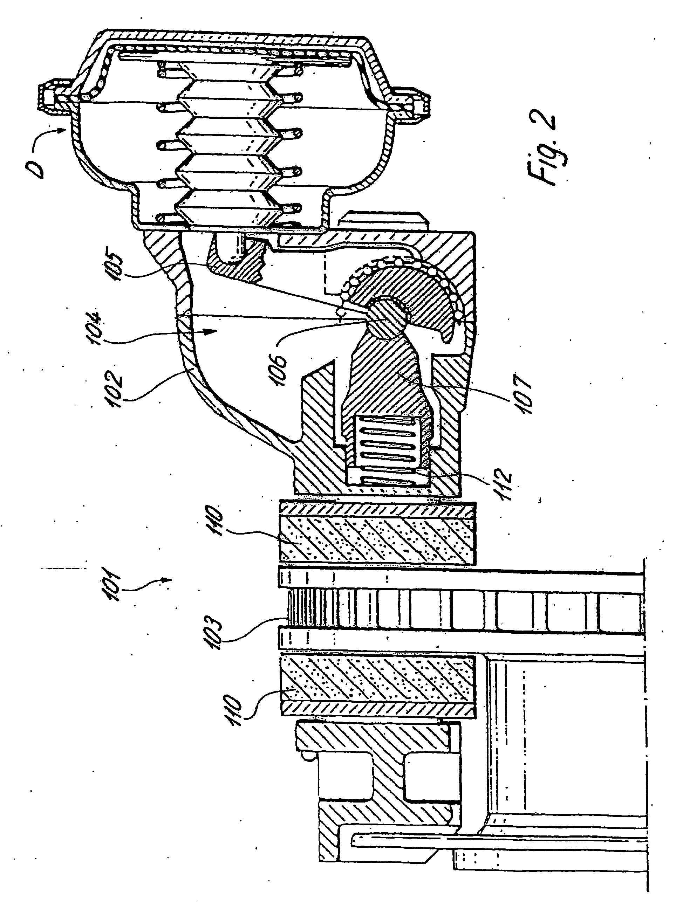

Nachfolgend sei die Nachstellvorrichtung 1 der Fig. 1 beschrieben, die sich beispielsweise zur Anordnung in einer der Stellspindeln der Bremse aus Fig.2 und 3 eignen würde.

Die Nachstellvorrichtung weist eine durchgehende zentrale Spindel 10 auf, an der an einem axialen Ende z.B. ein Rückdrehaußenmehrkant 11 ausgebildet ist, der beispielsweise eine Bohrung im Bremssattel (hier nicht dargestellt) durchgreifen kann und der dazu genutzt wird, die Nachstellvorrichtung beispielsweise beim Austausch der Beläge (hier nicht dargestellt) von Hand zurückzudrehen.

Am entgegengesetzten Ende der Spindel 10 ist auf die Spindel eine Zahnhülse 12 aufgesetzt, an deren Außenumfang wenigstens ein oder mehrere Zähne 13 ausgebildet sind, die in korrespondierende Nut der umgebenden Drehspindel eingreifen, die der eigentlichen Nachstellung des Bremsbelagverschleißes dient.

Wird die Zahnhülse 12 gedreht, nimmt sie die umgebende Stellspindel mit, die auf den z.B. zwei Zähnen 13 axial verschieblich aber relativ zu diesen unverdrehbar angeordnet ist.

Die Zahnhülse 12 wird mittels einer Feder 14 zwischen einem ihrer axialen Enden und einer auf der Spindel 10 befestigten Scheibe 15 an ihrem anderen axialen Ende vorgespannt.

Die Zahnhülse 12 stützt sich ferner über eine Kugelrampenanordnung 16 an einer Lagerhülse 4 ab.

In an sich bekannter Weise dient eine Schaltgabel 17 zur Übertragung der Bewegungen des Drehhebels der Zuspannvorrichtung der Scheibenbremse auf die Nachstellvorrichtung.

Diese Schaltgabel ist am Außenumfang einer Antriebsbuchse 1 ausgebildet, die einen ersten Teil einer Einweg-Drehrichtungskupplung 18 darstellt.

Die Einweg-Drehrichtungskupplung 18 weist eine Wälzkörperkupplung 8 sowie beidseits der Wälzkörperkupplung 8 angeordnete Reibungskupplungen 24, 25 auf.

Im einzelnen verfügt sie über folgenden Aufbau.

Sie weist die Antriebsbuchse 1 mit der Schaltgabel 17, einer vorzugsweise konischen Reibfläche 26 und mehreren Klemmtaschen 19 auf. In diese greifen mehrere Klemmkörper 2 (im Normalfall Kugeln) ein.

An die Klemmkörper 2 schließt sich eine Abtriebsbuchse 3 mit mehreren Klemmtaschen 20 an, die ferner eine Reibfläche 21 am gegenüber gesetzten Ende der Abtriebsbuchse aufweist.

An die Abtriebsbuchse schließt sich axial eine Lagerhülse 4 mit einer zur Abtriebsbuchse 3 korrespondierenden Reibfläche 22 an, an deren anderem Ende die Kugelrampenkupplung (Überlastkupplung 16) mit ihren Wälzkörpern 23 angeordnet ist. Am gegenüberliegenden Ende der Antriebsbuchse 1 ist ferner eine Buchse 5 mit einer zur Abtriebsbuchse 3 korrespondierenden Reibfläche vorgesehen, welche mit einem inneren, die Spindel 10 umgebenden und sich axial bis in diesen Bereich erstreckenden Ansatz der Lagerhülse 4 verbunden ist (z.B. vertaumelt). Zwischen der Buchse 5 und einem Flansch 24 ist ferner ein Axialkugellager 6 angeordnet.

Eine Drehfeder 7 umgibt die Antriebs- und die Abtriebsbuchse 2 und 3 teilweise und greift mit einem Ende in die Antriebsbuchse 1 und dem anderen Ende in die Abtriebsbuchse 3.

Die Klemmtaschen der Antriebs- und Abtriebsbuchse 1, 3 sind als schiefe Ebenen (Rampe) ausgebildet (rechter Ausschnitt in Fig. 1).

Die umgebende Drehfeder 7 ermöglicht bzw. bewirkt eine relative Verdrehung zwischen der Antriebsbuchse 1 und der Abtriebsbuchse 3.

Die Drehrichtung ist so orientiert, daß die Klemmkugeln 2 in den Klemmtaschen 19 auf deren Rampenkonturen rollen (Fig. 1b). Dadurch werden die beiden Buchsen 1 und 3 so weit axial auseinandergedrückt, bis die Reibflächen der beiden Buchsen 1 und 3 an ihren voneinander abgewandten Enden bzw. Gegenflächen zur Anlage kommen.

Die Funktion dieser Anordnung ist wie folgt.

### Verdrehung in Zustellrichtung

Wird über die Schaltgabel 17 eine Drehbewegung eingeleitet, bei der die Klemmkörper bzw. Kugeln 2 in Richtung Rampe bewegt werden, ergibt sich eine Axialkraft, die wiederum einen Kraftschluss in den beiden Reibungskupplungen 24 und 25 bewirkt. Da die Reibungskupplungen 24, 25 und die Rampenkupplung 8 so aufeinender abgestimmt sind, daß sich Selbsthemmung ergibt (M_{Reib} > M_{Kupplung}) wird die Drehbewegung von der Antriebsbuchse 1 bis zur Kugelrampenkupplung 16 und von dort über die Zahnhülse 12 in die Gewinderohre (die umgebenden Stellspindeln) eingeleitet.

### Verdrehung in Löserichtung

Wird durch die Schaltgabel 17 eine Drehbewegung eingeleitet, bei der die Klemmkörper bzw. Kugeln 2 von der Rampe herab bewegt werden, wird die Axialkraft und in Folge die Reibkraft so weit vermindert bis sich eine Verdrehung in den beiden Reibungskupplungen ergibt. Dabei ergibt sich, daß das Reibmoment der Reibungskupplung kleiner ist als das Verdrehmoment der vorgespannten Drehfeder.

Mit dem geschilderten Bewegungsablauf ist somit die Freilauffunktion gewährleistet.

### Bezugszeichen

- Antriebsbuchse: 1
- Klemmkörper: 2
- Abtriebsbuchse: 3
- Lagerhülse: 4
- Buchse: 5
- Axialkugellager: 6
- Drehfeder: 7
- Wälzkörperkupplung: 8
- Spindel: 10
- Rückdrehaußenmehrkant: 11
- Zahnhülse: 12
- Zähne: 13
- Feder: 14
- Scheibe: 15
- Überlastkupplung: 16
- Schaltgabel: 17
- Einweg-Drehrichtungskupplung: 18
- Klemmtaschen: 19
- Klemmtaschen: 20
- Reibfläche: 21
- Reibfläche: 22
- Wälzkörper: 23
- Reibungskupplungen: 24,25
- Reibfläche: 26
- Flansch: 27
- Scheibenbremse: 101
- Bremssattel: 102
- Bremsscheibe: 103
- Zuspannvorrichtung: 104
- Betätigungs-Drehhebel: 105
- Exzenter: 106
- Traverse: 107
- Stellspindeln: 108, 109
- Bremsbeläge: 110
- Kette: 111
- Feder: 112
- Drehantrieb: 113
- Druckstücke: 114, 115
- Druckluftzylinder: D

## Patentansprüche

1. Nachstellvorrichtung für eine pneumatisch betätigte Scheibenbremse zur Anordnung in einer umgebenden Drehspindel der Scheibenbremse, mit einer Überlastkupplung (16) und einer Einwegdrehrichtungskupplung (18), wobei die Einwegdrehrichtungskupplung (18) eine Wälzkörperkupplung (8) aufweist, **dadurch gekennzeichnet, dass** die Einwegdrehrichtungskupplung ferner beidseits der Wälzkörperkupplung (8) angeordnete Reibungskupplungen (24, 25) aufweist.

2. Nachstellvorrichtung nach Anspruch 1, **gekennzeichnet durch** eine Spindel (10), auf welche eine Zahnhülse (12) aufgesetzt sind, wobei die Zahnhülse (12) mittels einer Feder (14) in Richtung der Überlastkupplung - Kugelrampenkupplung (16) vorgespannt ist, wobei auf der der Zahnhülse (12) gegenüberliegenden Seite der Überlastkupplung (16) eine Lagerhülse (4) angeordnet ist.

3. Nachstellvorrichtung nach Anspruch 1, **gekennzeichnet durch** eine Antriebsbuchse (19), an der eine Schaltgabel (17) ausgebildet ist.

4. Nachstellvorrichtung nach Anspruch 1, **dadurch gekennzeichnet, dass** die Einweg-Drehrichtungskupplung 18 folgende Merkmale aufweist:
a. die Antriebsbuchse (1) mit der Schaltgabel (17), einer vorzugsweise konischen Reibfläche (26) an einem axialen Ende und mehreren Klemmtaschen (19) am anderen axialen Ende,
b. mehrere Klemmkörper (2), und
c. eine Abtriebsbuchse (3) mit mehreren Klemmtaschen (20) an ihrem der Antriebsbuchse (1) zugewandten Ende, in welche die Klemmkörper (2) eingreifen und mit einer Reibfläche (21) am gegenüber gesetzten Ende der Abtriebsbuchse (3).

5. Nachstellvorrichtung nach Anspruch 4, **dadurch gekennzeichnet, dass** die Einweg-Drehrichtungskupplung (18) weiter folgende Merkmale aufweist:
- eine Lagerhülse (4) mit einer zur Geometrie der Reibfläche an der Abtriebsbuchse (3) korrespondierenden Reibfläche (22), an deren anderen Ende die Überlastkupplung (16) mit ihren Wälzkörpern (23) ansetzt; und
- am gegenüberliegenden Ende der Antriebsbuchse (1) eine Buchse (5) mit einer zur Abtriebsbuchse (3)korrespondierenden Reibfläche, wobei die Buchse (5) mit einem inneren Ansatz der Lagerhülse (4) verbunden ist.

6. Nachstellvorrichtung nach Anspruch 4 oder 5, **dadurch gekennzeichnet, dass** die Einweg-Drehrichtungskupplung (18) weiter folgende Merkmale aufweist:
- ein Axialkugellager (6) zwischen der Buchse (5) und einem Flansch (27),
- einer Drehfeder (7), die mit einem Ende in die Antriebsbuchse und dem anderen Ende in die Abtriebsbuchse greift, und
- die Klemmtaschen der Antriebs- und Abtriebsbuchse (1, 3), welche als schiefe Ebene (Rampe) ausgebildet sind.

7. Nachstellvorrichtung nach einem der vorstehenden Ansprüche, **dadurch gekennzeichnet, dass** die Wälzkörperkupplung (8) und die Reibkupplungen (24, 25) so aufeinander abgestimmt sind, daß sich Selbsthemmung bei einer Verdrehung in Nachstellrichtung ergibt (M_{Reib} > M_{Kupplung}), so dass die Drehbewegung von der Antriebsbuchse (1) zur Kugelrampenkupplung (16) und von dort über die Zahnhülse (12) in die Stellspindeln eingeleitet wird.

8. Scheibenbremse mit einer Nachstellvorrichtung nach einem der vorstehenden Ansprüche.

## Claims

1. An adjusting apparatus for a pneumatically actuated disk brake for arrangement in a surrounding rotary spindle of the disk brake, with an overload coupling (16) and with a unidirectional coupling (18), wherein the unidirectional coupling has a rolling body coupling (8), **characterized in that** the unidirectional coupling further has friction clutches (24, 25) arranged on both sides of the rolling body coupling (8).

2. The adjusting apparatus as claimed in claim 1, **characterized by** a spindle (10), onto which a toothed sleeve (12) is placed, the toothed sleeve (12) being prestressed by means of a spring (14) in the direction of the overload coupling-ball ramp coupling (16), wherein a bearing sleeve (4) is arranged on that side of the overload coupling (16) which lies opposite the toothed sleeve (12).

3. The adjusting apparatus as claimed in claim 1, **characterized by** a drive bush (19) on which a shift fork (17) is formed.

4. The adjusting apparatus as claimed in claim 1, **characterized in that** the unidirectional coupling 18 has the following features:
a. the drive bush (1) with the shift fork (17), a preferably conical friction surface (26) at one axial end and with a plurality of clamping pockets (19) at the other axial end,
b. a plurality of clamping bodies (2), and
c. a driven bush (3) with a plurality of clamping pockets (20) at its end facing the drive bush (1), into which clamping pockets the clamping bodies (2) engage, and with a friction surface (21) at the opposite end of the driven bush (3).

5. The adjusting apparatus as claimed in claim 4, **characterized in that** the unidirectional coupling (18) has, further, the following features:
- a bearing sleeve (4) with a friction surface (22) which matches the geometry of the friction surface on the driven bush (3), at the other end of which starts the overload coupling (16) with its rolling bodies (23); and
- at the opposite end of the drive bush (1), a bush (5) with a friction surface matching the driven bush (3), wherein the bush (5) is connected to an inner extension of the bearing sleeve (4).

6. The adjusting apparatus as claimed in claim 4 or 5, **characterized in that** the unidirectional coupling (18) has, further, the following features:
- an axial ball bearing (6) between the bush (5) and a flange (27),
- a torsion spring (7) which engages with one end into the drive bush and with the other end into the driven bush, and
- the clamping pockets of the drive and the driven bush (1, 3) which are designed as an inclined plane (ramp).

7. The adjusting apparatus as claimed in one of the preceding claims, **characterized in that** the rolling body coupling (8) and the friction clutches (24, 25) are coordinated with one another such that self-locking occurs (M_{Fric} > M_{Coupling}) during rotation in the adjusting direction, so that the rotational movement is introduced from the drive bush (1) to the ball ramp coupling (16) and from there via the toothed sleeve (12) into the actuating spindles.

8. A disk brake with an adjusting apparatus as claimed in one of the preceding claims.

## Revendications

1. Dispositif de rattrapage de jeu pour un frein à disque à commande pneumatique dans une broche de tournage entourant du frein à disque, comprenant un coupleur en surcharge (16) et un coupleur de sens de rotation à voie unique (18), audit coupleur de sens de rotation à voie unique (18) renfermant un coupleur à corps roulant (8), **caractérisé en ce que** ledit coupleur de sens de rotation à voie unique comprend au plus des coupleurs à friction (24, 25) disposés des deux côtés dudit coupleur à corps roulant (8).

2. Dispositif de rattrapage de jeu selon la revendication 1, **caractérisé par** une broche (10), sur laquelle est placé une douille dentée (12), à ladite douille dentée (12) étant mise en précontrainte moyennant un ressort (14) en sens vers ledit coupleur en surcharge - coupleur à rampe de bille (16), et à une douille de logement (4) étant disposée du côté dudit coupleur en surcharge (16), qui est opposé à ladite douille dentée (12).

3. Dispositif de rattrapage de jeu selon la revendication 1, **caractérisé par** un coussinet d'entraînement (19), auquel est formé une fourchette d'embrayage (17).

4. Dispositif de rattrapage de jeu selon la revendication 1, **caractérisé en ce que** ledit coupleur de sens de rotation à voie unique (18) présente les caractéristiques suivantes :
a) ledit coussinet d'entraînement (1) à ladite fourchette d'embrayage (17) présente une aire de friction (26) conique, de préférence, à une extrémité axiale et plusieurs poches de serrage (19) à l'autre extrémité axiale,
b) plusieurs corps de serrage (2), et
c) un coussinet de sortie (3) à plusieurs poches de serrage (20) à son extrémité en face dudit coussinet d'entraînement (1), dans lesquels se trouvent en prise lesdits corps de serrage (2), et à une aire de friction (21) à l'extrémité y opposée dudit coussinet de sortie (3).

5. Dispositif de rattrapage de jeu selon la revendication 4, **caractérisé en ce que** ledit coupleur de sens de rotation à voie unique (18) présente au plus les caractéristiques suivantes :
- une douille de logement (4) à une aire de friction (22) en correspondance avec la géométrie de ladite aire de friction audit coussinet de sortie (3), audit coupleur en surcharge (16) attaquant par ses corps roulants (23) à son autre extrémité ; et
- un coussinet (5) à une aire de friction en correspondance avec ledit coussinet de sortie (3) à l'extrémité opposée dudit coussinet d'entraînement, audit coussinet (5) étant relié à une saillie intérieure de ladite douille de logement (4).

6. Dispositif de rattrapage de jeu selon la revendication 4 ou 5, **caractérisé en ce que** ledit coupleur de sens de rotation à voie unique (18) présente au plus les caractéristiques suivantes :
- un roulement à billes axial (6) entre ledit coussinet (5) et un collet (27),
- un ressort de torsion (7), qui se trouve en prise par une extrémité dans ledit coussinet d'entraînement et par son autre extrémité dans ledit coussinet de sortie, et
- lesdites poches de serrage desdits coussinets d'entraînement et de sortie (1, 3), qui sont configurés sous forme d'un plan incliné (rampe).

7. Dispositif de rattrapage de jeu selon une quelconque des revendications précédentes, **caractérisé en ce que** ledit coupleur à corps roulant (8) et lesdits coupleurs à friction (24, 25) sont accordés l'un à l'autre d'une telle façon, qu'un effet d'autoblocage soit achevé au cas d'une rotation en sens de rattrapage (M_{friction} > M_{couplage}) de manière, que le mouvement rotatif soit introduit à partir dudit coussinet d'entraînement (1) vers ledit coupleur à rampe de billes (16) et de là via ladite douille dentée (12) dans les broches d'ajustage.

8. Frein à disque à un dispositif de rattrapage de jeu selon une quelconque des revendications précédentes.
